(19) Europäisches Patentamt
European Patent Office
Office européen des brevets

(11) **EP 2 592 685 A2**

(12) **EUROPÄISCHE PATENTANMELDUNG**

(43) Veröffentlichungstag:
**15.05.2013 Patentblatt 2013/20**

(21) Anmeldenummer: **13000639.8**

(22) Anmeldetag: **07.10.2009**

(51) Int Cl.:
*H01M 10/44* (2006.01)  *H01M 10/42* (2006.01)
*H01M 10/48* (2006.01)  *H02J 7/00* (2006.01)
*H01M 10/052* (2010.01)

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.10.2008 DE 102008053089**

(62) Dokumentnummer(n) der früheren Anmeldung(en) nach Art. 76 EPÜ:
**09012720.0 / 2 180 540**

(71) Anmelder: **Li-Tec Battery GmbH**
**01917 Kamenz (DE)**

(72) Erfinder:
• **Schäfer, Tim**
**99768 Harztor (DE)**

• **Gutsch, Andreas, Dr.**
**59348 Lüdinghausen (DE)**

(74) Vertreter: **Wallinger, Michael**
**Wallinger Ricker Schlotter Tostmann**
**Patent- und Rechtsanwälte**
**Zweibrückenstrasse 5-7**
**80331 München (DE)**

Bemerkungen:
Diese Anmeldung ist am 07-02-2013 als Teilanmeldung zu der unter INID-Code 62 erwähnten Anmeldung eingereicht worden.

(54) **Akkumulator mit mehreren galvanischen Zellen**

(57) Erfindungsgemäß weist ein Akkumulator (1) wenigstens zwei galvanische Zellen (2) auf, welche elektrisch verschaltet sind. Weiter weist der Akkumulator (1) eine Steuereinrichtung (3) und wenigstens eine Messeinrichtung (4, 4a, 4b) auf. Die Messeinrichtung (4, 4a, 4b) ist vorgesehen, wenigstens einen Messwert zu einem ersten Funktionsparameter einer galvanischen Zelle zu ermitteln. Der Akkumulator (1) weist eine Speichereinheit (6) auf, welche der Steuereinrichtung (3) zugeordnet ist. Die Speichereinheit ist vorgesehen, wenigstens einen Zielwert eines ersten Funktionsparameters abzuspeichern. Der Akkumulator (1) weist weiter eine Recheneinrichtung (5) auf. Die Recheneinrichtung(5) ist vorgesehen, wenigstens zwei Messwerte und einen zugehörigen Zielwert zu einem ersten Berechnungsergebnis zu verknüpfen. Bei den Messwerten handelt es sich um den gemessenen ersten Funktionsparameter von wenigstens zwei galvanischen Zellen (2) des Akkumulators (1) . Bei dem Zielwert handelt es sich um einen vorgegebenen Wert zu dem ersten Funktionsparameter. Die Steuereinrichtung (3) ist vorgesehen, in Abhängigkeit von dem ersten Berechnungsergebnis eine vorbestimmte Maßnahme einzuleiten.
(Fig.1 )

Fig.1

**Beschreibung**

Die vorliegende Erfindung betrifft eine galvanische Zelle für einen Akkumulator. Die Erfindung wird im Zusammenhang mit Lithium-Ionen-Akkumulatoren zur Versorgung von elektrischen Antrieben, insbesondere KFZ-Antrieben, beschrieben. Es wird darauf hingewiesen, dass die Erfindung auch unabhängig von der Bauart des Akkumulators oder unabhängig von der Art des versorgten Antriebs Verwendung finden kann.

Aus dem Stand der Technik sind Akkumulatoren mit mehreren galvanischen Zellen auch zur Versorgung von KFZ-Antrieben bekannt. Einige Bauarten weisen mehrere elektrisch verschaltete Zellen auf. Es kommt vor, dass im Anschluss an einen Ladevorgang nicht alle Zellen vollständig aufgeladen sind. So kann nur ein Teil der verfügbaren Ladekapazität genutzt werden.

Der Erfindung liegt daher die Aufgabe zugrunde, die Nutzung der verfügbaren Ladekapazität eines Akkumulators zu verbessern. Die Aufgabe wird durch den Gegenstand des Anspruchs 1 und das Verfahren zu deren Betrieb ensprechend Anspruch 9 gelöst. Zu bevorzugende Weiterbildungen der Erfindung sind Gegenstand der Unteransprüche.

Erfindungsgemäß weist ein Akkumulator wenigstens zwei galvanische Zellen auf, welche elektrisch verschaltet sind. Weiter weist der Akkumulator eine Steuereinrichtung und wenigstens eine Messeinrichtung auf. Die Messeinrichtung ist vorgesehen, wenigstens einen Messwert zu einem ersten Funktionsparameter einer galvanischen Zelle zu ermitteln. Der Akkumulator weist eine Speichereinheit auf, welche der Steuereinrichtung zugeordnet ist. Die Speichereinheit ist dafür vorgesehen, wenigstens einen Zielwert eines ersten Funktionsparameters abzuspeichern. Der Akkumulator weist weiter eine Recheneinrichtung auf. Die Recheneinrichtung ist dafür vorgesehen, wenigstens zwei Messwerte und einen Zielwert zu einem ersten Berechnungsergebnis zu verknüpfen. Bei den Messwerten handelt es sich um die gemessenen ersten Funktionsparameter von wenigstens zwei galvanischen Zellen des Akkumulators. Bei dem Zielwert handelt es sich um einen vorgegebenen Wert zu dem ersten Funktionsparameter. Die Steuereinrichtung ist dafür vorgesehen, in Abhängigkeit von dem ersten Berechnungsergebnis eine vorbestimmte Maßnahme einzuleiten.

Vorliegend wird unter einem Akkumulator eine Vorrichtung verstanden, welche der Aufnahme und Abgabe elektrischer Energie dient. Der Akkumulator wird im Verlauf seiner Nutzung wiederholt geladen und zur Versorgung eines elektrischen Verbrauchers anschließend entladen. Zur Speicherung der elektrischen Energie weist der Akkumulator wenigstens zwei galvanische Zellen und einige weitere Einrichtungen auf, welche einen ordentlichen Betrieb des Akkumulators ermöglichen. Es ist üblich, dass ein Akkumulator, beispielsweise zur Versorgung eines KFZ-Antriebs, mit einer Vielzahl galvanischer Zellen ausgerüstet ist.

Vorliegend ist unter einer galvanischen Zelle eine Einrichtung zu verstehen, welche zugeführte elektrische Energie in chemische Energie wandelt und als solche speichert. Beim Entladen wird die gespeicherte chemische Energie zunächst wieder in elektrische Energie gewandelt. Die galvanische Zelle ist wenigstens mit zwei Anschlüssen versehen, welche sich durch entgegengesetzte Polarität auszeichnen. Mit fortschreitendem Alter oder zunehmenden Lade-/Entladevorgängen sinkt die verfügbare Ladekapazität einer galvanischen Zelle auch durch unumkehrbare chemische Reaktionen. Zur Erhaltung der Ladekapazität bzw. zur Verlängerung der Nutzungsdauer sind sowohl die Überladung einer galvanischen Zelle als auch deren Tiefentladung zu vermeiden. Insbesondere im Verbund mit weiteren galvanischen Zellen ist eine galvanische Zelle einer erhöhten Gefahr durch Über-/Tiefentladung ausgesetzt.

Die wenigstens zwei galvanischen Zellen sind miteinander verschaltet. Üblicherweise weist ein Akkumulator jedoch eine größere Anzahl galvanische Zellen auf. Diese sind teilweise in Reihenschaltung für eine gewünschte Leerlaufspannung des Akkumulators und/oder in Parallelschaltung für eine erhöhte Ladekapazität verschaltet. Auch können mehrere Gruppen galvanischer Zellen parallel geschaltet sein. Dabei sind die galvanischen Zellen einer Gruppe in Reihe geschaltet.

Vorliegend ist unter einer Steuereinrichtung eine Einrichtung zu verstehen, welche auch das Zusammenwirken der verschiedenen Einrichtungen des Akkumulators in seinen verschiedenen Betriebszuständen steuert und überwacht. Bevorzugt ist die Steuereinrichtung als eine elektronische Baugruppe ausgebildet. Bei Bedarf kann die Steuereinrichtung des Akkumulators gewechselt werden. Besonders bevorzugt können die Programme zum Betrieb der Steuereinrichtung, etwa im Rahmen von Wartungsarbeiten, überschrieben werden.

Vorliegend ist unter einer Messeinrichtung eine Einrichtung zu verstehen, welche mit wenigstens einem geeigneten Messfühler einen physikalischen Parameter oder Funktionsparameter einer galvanischen Zelle misst. Bevorzugt stellt die Messeinrichtung den Messwert des physikalischen Parameters als elektronisches Signal zur Verfügung. Wenn ein Messfühler kein elektronisch nutzbares Signal, beispielsweise in Form einer proportionalen elektrischen Spannung, abgibt, so wandelt die Messeinrichtung das Signal zunächt in eine proportionale Spannung.

Bevorzugt ist eine Messeinrichtung in der Lage, einen physikalischen Parameter mehrerer galvanischer Zellen zu ermitteln, besonders bevorzugt innerhalb von Sekundenbruchteilen zu ermitteln.

Bevorzugt wird ein physikalischer Parameter einer galvanischen Zelle mehrmals hintereinander ermittelt und eine Filterung des Signals bereits in der Messeinrichtung vorgenommen.

Abhängig von der Bauart des Akkumulators ist es sinnvoll, dass diese mit mehreren Messeinrichtungen ausgestattet ist. Beispielsweise kann eine Gruppe galvanischer Zellen mit einer eigenen Messeinrichtung ausgerüstet sein. Dabei weist die Messeinrichtung die zur Erfassung der Betriebszustände und/oder Eigenschaften der galvanischen Zelle erforderlichen Messfühler auf, beispielsweise Temperaturfühler, Stromstärkefühler, Spannungsfühler. Eine Messeinrichtung kann bei Bedarf aber auch wechselweise mit einzelnen Zellen oder Gruppen von Zellen messend verbunden werden.

Vorliegend ist unter einer Speichereinheit eine Einheit zu verstehen, welche auch Daten und Informationen abspeichert, welche während des Betriebs des Akkumulators anfallen. Die abgespeicherten Daten und Informationen können auch gelesen werden. Vorzugsweise handelt es sich um einen elektronischen Speicherbaustein, der in verschiedenen Bereichen abgespeicherte Daten, Rechenvorschriften und/oder Vorschriften für den Betrieb der Steuereinrichtung aufweist. Besonders bevorzugt behält die Speichereinheit ihre Speicherinhalte auch ohne Energieversorgung. Das Speichern von Daten, Rechenvorschriften und/oder Vorschriften für den Betrieb der Steuereinrichtung kann auch auf mehreren getrennten Speichereinrichtungen erfolgen.

Vorliegend sind unter dem Begriff Funktionsparameter solche physikalischen Größen zu verstehen, die zur Beschreibung der Eigenschaften und des Betriebszustands einer galvanischen Zelle dienlich sind. Das sind beispielsweise die Ladekapazität einer solchen Zelle, der vorliegende Grad der Aufladung sprich Teilladung der Zelle, deren elektrische Leerlaufspannung oder die lastabhängige Klemmenspannung, die Stärke eines zur Ladung oder Entladung führenden elektrischen Stroms, der Innenwiderstand einer galvanischen Zelle, die bereits geladene oder verfügbare elektrische Ladung der galvanischen Zelle, ein möglicher elektrischer Leckstrom innerhalb der Zelle, deren Temperatur. Je nach Anforderungen an den Betrieb dieses Akkumulators, können auch andere physikalische Größen der galvanischen Zelle von Interesse sein. Auch sind beispielsweise die Zahl der Ladevorgänge, das Alter der Zelle, die etwa seit dem letzten Ladevorgang entnommene elektrische Ladung und ähnliche Angaben Funktionsparameter einer galvanischen Zelle.

Vorliegend ist unter einem Zielwert eines Funktionsparameters ein erwünschter und/oder geplanter Wert zu diesem Funktionsparameter zu verstehen. Weiter ist unter dem Zielwert auch ein erwünschter und/oder geplanter zeitlicher Verlauf eines Funktionsparameters einer galvanischen Zelle zu verstehen. Der Zielwert ist auch als Sollwert entsprechend der Bedeutung des Begriffs im Gebiet der Regelungstechnik zu verstehen. Ein abgespeicherter Zielwert kann bei Bedarf überschrieben werden, etwa wenn ein Berechnungsergebnis oder das Verhalten einer galvanischen Zelle bzw. des Akkumulators dazu Anlass gibt.

Vorliegend ist unter einer Recheneinrichtung eine Einrichtung zu verstehen, welche geeignet ist, erfasste Messwerte und Zielwerte rechnerisch miteinander zu verknüpfen. Beispielsweise wird die Abweichung als Differenz zwischen Messwert und Zielwert berechnet. Beispielsweise wird die Abweichung als ein Verhältnis aus Messwert und Zielwert berechnet:

$$A = \frac{M - Z}{Z}$$

wobei A für die Abweichung, M für den Messwert zu einem Funktionsparameter und Z für den Zielwert steht. Weiter stellt die Recheneinrichtung das Ergebnis der Verknüpfung als Berechnungsergebnis zur Verfügung. Dabei kann die Recheneinrichtung auch zwei getrennte Verknüpfungen je eines Messwertes mit einem Zielwert betreffend zwei verschiedene galvanische Zellen durchführen. Die Recheneinrichtung ermittelt so die Abweichung des Betriebszustands wenigstens zweier galvanischer Zellen von einem erwünschten bzw. einem geplanten Betriebszustand.

Vorliegend ist unter einem ersten Berechnungsergebnis die Abweichung eines Messwertes eines Funktionsparameters von einem zugehörigen Zielwert zu verstehen. Dabei umfasst das erste Berechnungsergebnis ggf. mehrere Einzelergebnisse, welche einzelne galvanische Zellen betreffen, beispielsweise so viele Einzelergebnisse wie gemessene galvanische Zellen. Aus einem Berechnungsergebnis mit mehreren Einzelergebnissen kann erkannt werden, dass eine galvanische Zelle einen bedeutsam anderen Ladezustand aufweist, als die übrigen, dem Vergleich mit unterworfenen, Zellen.

Bei Ladung bzw. Entladung miteinander verschalteter Zellen mit unterschiedlichen Ladezuständen können einzelne Zellen überladen oder tiefentladen werden. Beides ist schädlich. Wenn der Lade- oder Entladevorgang aber vorzeitig beendet wird, so ist ein Teil der Ladekapazität des Akkumulators ungenutzt. Abhängig von dem ersten Berechnungsergebnis ist die Steuereinrichtung vorgesehen, bei unerwünschten Abweichungen zwischen einem Messwert und einem zugehörigen Zielwert einer galvanischen Zelle eine Abstellmaßnahme einzuleiten. Eine solche Maßnahme kann darin bestehen, der Recheneinrichtung einen neuen Zielwert vorzugeben. Weiter können weitere Einrichtungen des Akkumulators zu- oder abgeschaltet werden. Es kann der zeitliche Abstand zwischen zwei Messungen eines Funktionsparameters einer galvanischen Zelle verändert werden. Vorzugsweise werden der Lade- bzw. Entladestrom einer galvanischen Zelle bei abweichendem Ladezustand begrenzt oder erhöht. Ein Lade- oder Entladevorgang einer galvanischen Zelle kann vorzeitig begonnen oder beendet werden. Es kann eine Kühl- oder Heizeinrichtung zugeschaltet werden. Ziel der Maßnahme ist der Ausgleich bzw. die Angleichung verschiedener Ladezustände mehrerer Zellen.

So wird die Nutzung der verfügbaren Ladekapazität eines Akkumulators verbessert und die zugrunde liegende Aufgabe gelöst. Nachfolgend werden zu bevorzugende Weiterbildungen der Erfindung beschrieben.

Vorzugsweise ist die Speichereinheit des Akkumulators vorgesehen, Messwerte zu Funktionsparametern einer galvanischen Zelle gemeinsam mit weiteren Werten, welche sowohl eine zeitliche Zuordnung und/oder eine Zuordnung der galvanischen Zelle ermöglicht, abzuspeichern. Auch können aus Messwerten abgeleitete Größen mit zuordnenden Werten abgespeichert werden. Aus diesen Daten entsteht ein Verlaufsprotokoll des Betriebs der verschiedenen galvanischen Zellen des erfindungsgemäßen Akkumulators. Das Verlaufsprotokoll gestattet beispielsweise, die fortgeschrittene Alterung einer einzelnen galvanischen Zelle zu erkennen oder Erkenntnisse über einen möglicherweise von der Planung abweichenden Gebrauch des versorgten Antriebs zu gewinnen.

Vorteilhaft ist die Steuereinrichtung vorgesehen, der Recheneinheit einen Zielwert bzw. einen Zielwertverlauf zu einem Funktionsparameter mitzuteilen. Das geschieht auch unter Berücksichtigung der fortschreitenden Alterung einer galvanischen Zelle. Auch kann auf diese Weise einer besonderen Beanspruchung des Akkumulators Rechnung getragen werden, wenn beispielsweise über einen Zeitraum dem Akkumulator ein besonders hoher Strom entnommen wurde. Auch wenn die Temperatur einer galvanischen Zelle aus anderen Gründen unerwünscht hoch ist, kann der Recheneinrichtung ein veränderter Zielwert beispielsweise zur Stärke des Lade- oder Entladestroms mitgeteilt werden.

Vorteilhaft ist die Steuereinrichtung vorgesehen, das Laden und Entladen einer galvanischen Zelle zu steuern und zu überwachen. Vorzugsweise erfolgt das Laden bzw. Entladen einer galvanischen Zelle entsprechend einer vorgegebenen Ladevorschrift.

Unter dem Begriff "Ladevorschrift" sind vorliegend sowohl Vorschriften zum Laden einer galvanischen Zelle als auch zu deren Entladung zu verstehen. Beispielsweise enthält eine Ladevorschrift vorgegebene Stromstärke-Zeit-Verläufe für einen Lade- und/oder Entladevorgang einer galvanischen Zelle.

Vorliegend sind unter dem Begriff "Ladezustand" solche Angaben zu verstehen, welche zur Beschreibung des Zustands der galvanischen Zelle dienen. Der Begriff ist somit weiter gefasst als der zuvor genannte Begriff "Funktionsparameter" und beinhaltet diese. Unter Ladezustand sind auch Angaben betreffend Lade-oder Entladevorgänge einer galvanischen Zelle der jüngeren Vergangenheit zu verstehen. Für den Ladezustand einer galvanischen Zelle sind auch die zeitlichen Verläufe der Lade- bzw. Entladeströme der jüngeren Vergangenheit, welche die gegenwärtig gespeicherte Energie bewirkt haben, von Bedeutung. Insbesondere hohe Entladeströme aus Beschleunigungsvorgängen des Kraftfahrzeugs, Tiefentladung oder Überladung beanspruchen eine galvanische Zelle in besonderem Maß. Vorzugsweise wird zur Bestimmung des Ladezustands auch das erste Berechnungsergebnis verwendet.

So ist eine Ladevorschrift auch an eine besondere Beanspruchung, eine bestimmte Temperatur der galvanischen Zelle und/oder deren Teilladung angepasst. Bei Vorliegen eines bestimmten Ladezustands steuert die Steuereinrichtung das Laden bzw. das Entladen einer galvanischen Zelle gemäß einer für diesen Ladezustand vorgesehenen Ladevorschrift.

Bevorzugt sind die vorgegebenen Ladevorschriften in der Speichereinheit abgespeichert.

Bevorzugt steuert die Steuereinrichtung den Ladevorgang durch ein unabhängiges Ladegerät, indem die Steuereinrichtung dem unabhängigen Ladegerät zu verwendende Ladevorschriften übermittelt. Auch kann die Steuereinrichtung einen beispielsweise gleichförmigen Ladestrom eines unabhängigen Ladegeräts gemäß einer vorgegebenen Ladevorschrift zur Ladung einer galvanischen Zelle anpassen.

Vorteilhaft ist die Steuereinrichtung vorgesehen, bei Vorliegen verschiedener Ladezustände zweier galvanischer Zellen gemäß verschiedener vorgegebener Ladevorschriften zu laden bzw. zu entladen. Während des Betriebs eines Akkumulators kann es vorkommen, dass zwei galvanische Zellen unterschiedliche Ladezustände aufweisen bzw. das unterschiedliche Werte zu demselben Funktionsparameter gemessen werden. Hier sind insbesondere unterschiedliche Stromstärke-Zeit-Verläufe, unterschiedliche Temperaturen und unterschiedlicher Grad der Ladung einer galvanischen Zelle, sprich Teilladung, bedeutsam. Diese Angaben lassen auch auf unterschiedliche Beanspruchungen der galvanischen Zelle in der jüngeren Vergangenheit schließen. Sofern galvanische Zellen mit verschiedenen Ladezuständen dennoch entsprechend derselben Ladevorschrift behandelt werden, so kann es vorkommen, dass nach Abschluss einer Ladevorgangs eine der Zellen überladen und heiß geworden ist, während eine andere galvanische Zelle noch nicht vollständig aufgeladen ist. Zum weitgehenden Ausgleich unterschiedlicher Ladezustände erfolgt das Laden bzw. das Entladen von galvanischen Zellen des Akkumulators ggf. gemäß unterschiedlicher vorgegebener Ladevorschriften. So können sich zwei ansonsten gleichartige Ladevorschriften auch nur durch verschiedene zeitliche Länge oder unterschiedliche Stromstärke auszeichnen.

Vorteilhaft weist eine vorgegebene Ladevorschrift wenigstens einen Ladepuls auf. Bei einem Ladepuls handelt es sich um einen zeitlich begrenzten zeitabhängigen Stromstärkeverlauf und/oder Spannungsverlauf. Eine Ladevorschrift kann auch eine Abfolge einzelner Ladepulse aufweisen. Vorliegend ist unter einem Ladepuls eine zeitlich begrenzte Zufuhr oder Entnahme einer Energiemenge zu verstehen. Dabei kann die zugeführte oder entnommene elektrische Leistung über der Zeit veränderlich sein.

Vorteilhaft ist die Steuereinrichtung in der Lage, eine Ladevorschrift auf Grundlage von ersten Berechnungsergebnissen anzupassen und zu überschreiben. So kann beispielsweise eine Ladevorschrift für eine teilweise beschädigte galvanische Zelle angepasst oder eine eigene Ladevorschrift erzeugt werden. Das kann erforderlich sein, wenn eine galvanische Zelle bei Behandlung gemäß einer geeigneten Ladevorschrift unerwartet heiß wird oder deren Verhalten auf eine ungeplante Verringerung der verfügbaren Ladekapazität schließen lässt.

Vorteilhaft ist die Steuerungseinrichtung zum Signalaustausch mit einer unabhängigen Steuerung eingerichtet. Wenigstens von Zeit zu Zeit tauscht die Steuerungseinrichtung mit der unabhängigen Steuerung vorbestimmte Meldungen aus. Der Austausch einer Meldung kann auch ein bestätigendes Signal der jeweils anderen Steuerung beinhalten. Dabei werden insbesondere solche Meldungen ausgetauscht, die Aufschluss über unerwartetes oder fehlerhaftes Verhalten des Akkumulators oder einer seiner Einrichtungen Aufschluss geben.

Vorteilhaft wird ein erfindungsgemäßer Akkumulator derart betrieben, dass in geplanter zeitlicher Abfolge oder bei Bedarf auch während eines Lade- bzw. Entladevorgangs einer galvanischen Zelle eine Reihe von Verfahrensschritten ausgeführt wird. Diese erfolgen im engen zeitlichen Zusammenhang und gestatten der Steuereinrichtung eine zeitnahe Kenntnis der Funktionsparameter und auch des Ladezustands einer galvanischen Zelle.

Vorteilhaft wird ein erfindungsgemäßer Akkumulator derart betrieben, dass die Steuereinrichtung bei Vorliegen eines bestimmten ersten Berechnungsergebnisses und eines entsprechenden Ladezustands einer galvanischen Zelle eine Maßnahme zur Berichtigung des Ladezustands einleitet. Diese Maßnahmen sind vorbestimmt und betreffen weitere Einrichtungen des Akkumulators, zu verwendende Ladevorschriften oder bedeuten das Absetzen einer Meldung an eine übergeordnete Steuerung.

Vorteilhaft wird ein erfindungsgemäßer Akkumulator derart betrieben, dass in der Speichereinheit Ereignisse aus dem Betrieb des Akkumulators abgespeichert werden. Diese Ereignisse können neben eingeleiteten Maßnahmen auch abgeschlossene Handlungen der Steuereinrichtung betreffen. Insbesondere sind solche Ereignisse abzuspeichern, die Aufschluss über eine nicht ordnungsgemäße Arbeitsweise des Akkumulators Aufschluss geben.

Vorteilhaft wird ein erfindungsgemäßer Akkumulator derart betrieben, dass die Steuereinrichtung in Abhängigkeit eines ersten Berechnungsergebnisses verschiedene Ladezustände einzelner galvanischer Zellen berücksichtigt. Zur Schonung der galvanischen Zellen und zur Nutzung des größtmöglichen Teils der Ladekapazität des Akkumulators ruft die Steuereinrichtung verschiedene Ladevorschriften für galvanische Zellen mit unterschiedlichen Ladezuständen auf.

Weitere Vorteile, Merkmale und Anwendungsmöglichkeiten der vorliegenden Erfindung ergeben sich aus der nachfolgenden Beschreibung in Zusammenhang mit den Figuren. Es zeigt:

Fig. 1 einen schematischen Aufbau eines Ausführungsbeispiels eines erfindungsgemäßen Akkumulators

Fig. 2 zwei Muster von Ladepulsen zweier Ladevorschriften zur Ladung einer galvanischen Zelle

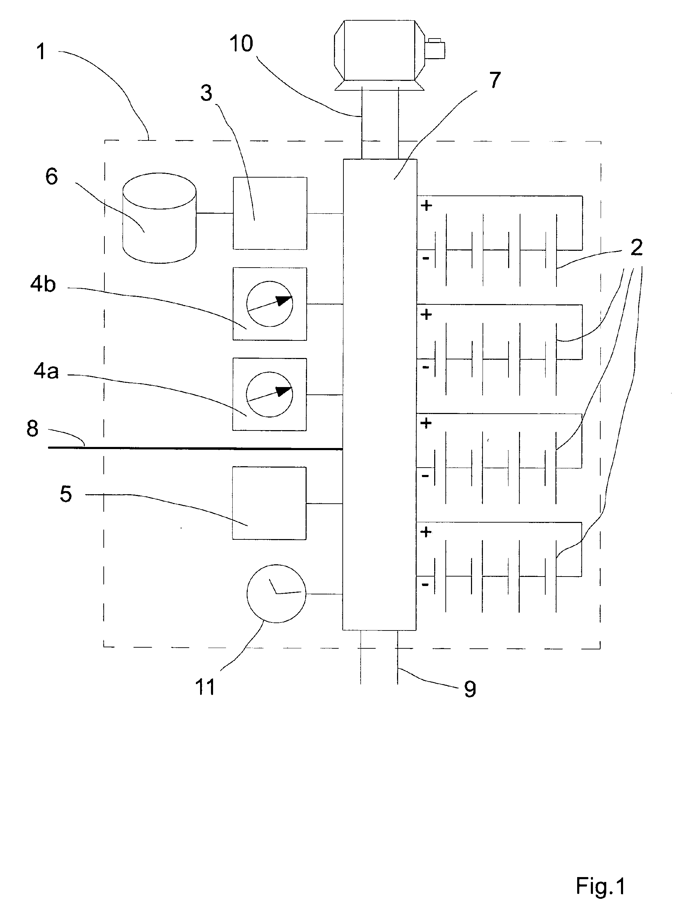

Figur 1 zeigt eine schematische Darstellung eines erfindungsgemäßen Akkumulators 1, welcher einen Kfz-Antrieb versorgt. Der Akkumulator weist vier Gruppen galvanischer Zellen auf, deren Zuleitungen vereinfacht dargestellt sind. Jede dieser Gruppen weist je vier galvanische Zellen 2 auf, welche in Reihe geschaltet sind. Weiter weist der Akkumulator 1 eine Steuereinrichtung 3, zwei Messeinrichtungen 4a und 4b, eine Recheneinrichtung 5, eine Speichereinheit 6 und eine Steuerleitung zu einer unabhängigen Steuerung 8 auf. Weiter weist der Akkumulator einen Kommunikationsbus 7 und Leitungen für Lade- bzw. Entladeströme auf. Die letzteren sind nur teilweise dargestellt. Auch sind Leitungen 9 zur Verbindung mit einem externen Ladegerät und Leitungen 10 zur Verbindung mit dem KFZ-Antriebdargestellt. Weiter ist eine Uhr 11 vorgesehen

Obwohl eine Gruppe galvanischer Zellen als Reihenschaltung von vier Zellen dargestellt ist, sind die galvanischen Zellen 2 jeweils einzeln lad- oder entladbar. Diese Darstellung ist aus Gründen der Übersichtlichkeit vereinfacht.

Bei der Messeinrichtung 4a handelt es sich um einen Messfühler zur Erfassung der Temperaturen der einzelnen galvanischen Zellen 2. Über den Kommunikationsbus 7 ist jeweils ein einer Zelle 2 zugeordnetes Thermoelement mit diesem Thermofühler verbindbar. Bei der Messeinrichtung 4b handelt es sich um eine Strommesseinrichtung. Auch diese Strommesseinrichtung 4b ist über den Kommunikationsbus 7 mit verschiedenen Strommessfühlern der einzelnen galvanischen Zellen 2 oder der Versorgungsleitung 10 verbindbar. Nach einem Messvorgang stellt eine Messeinrichtung 4a oder 4b den Messwert zur Verarbeitung durch die Recheneinrichtung 5 zur Verfügung. Innerhalb eines sehr kurzen Zeitraums erfolgt die Messung eines Funktionsparameters zu mehreren galvanischen Zellen 2. Die Recheneinrichtung 5 erhält die Messwerte gemeinsam mit einem Zeitsignal und einem weiteren Signal, welches die Zuordnung des Messwertes zu einer galvanischen Zelle 2 ermöglicht. Auch erhält die Recheneinrichtung 5 Zielwerte von der Steuereinrichtung 3. Regelmäßig verknüpft die Recheneinrichtung 5 die Messwerte zu einem ersten Funktionsparameter zu den einzelnen galvanischen Zellen 2 einer Gruppe mit einem Zielwert zu einem ersten Berechnungsergebnis. Dieses erste Berechnungsergebnis weist vier einzelne Abweichungen, jeweils zwischen einem Messwert zu einem ersten Funktionsparameter und dem zugehörigen Zielwert auf. Die Recheneinrichtung 5 stellt dieses erste Berechnungsergebnis zur Weiterverarbeitung zur Verfügung. Die Steuereinrichtung 3 übermittelt Messwerte zu Funktionsparametern, die Zuordnung zu der betreffenden galvanischen Zelle 2, den Zeitpunkt der Messung und die Abweichung vom Zielwert der Speichereinrichtung 6 zum Abspeichern.

In Kenntnis des Betriebszustands und unter Verwendung eines ersten Berechnungsergebnisses veranlasst die Steuereinrichtung 3 das Laden oder Entladen der galvanischen Zellen 2 entsprechend vorgegebener Ladevorschriften. Sofern die Ladezustände der galvanischen Zellen 2 einer Gruppe voneinander bedeutsamen abweichen oder der gemeinsame Ladezustand einer Gruppe von einer anderen Gruppe bedeutsam abweicht, so veranlasst die Steuereinrichtung 3 das Laden oder Entladen einer Gruppe galvanischer Zellen oder einzelner galvanischer Zellen 2 entsprechend verschiedener Ladevorschriften. Ziel der Verwendung ggf. verschiedener Ladevorschriften ist der Ausgleich verschiedener Ladezustände einzelner galvanischer Zellen 2, sofern diese Unterschiede bedeutsam für die Verringerung der nutzbaren Ladekapazität des Akkumulators oder für die Überladung bzw. Tiefentladung einzelner galvanischer Zellen 2 ist.

So kann die Steuereinrichtung 3 bei Bedarf für eine einzelne galvanische Zelle 2 eine besondere Beobachtung durch häufigere Messung von Funktionsparametern und Vergleiche mit dem Zielwert vorsehen.

Sofern der Zustand einzelner galvanischer Zellen 2 eine bedeutsame Verringerung der verfügbaren Ladekapazität der Akkumulators 1 bewirkt, so tauscht die Steuereinrichtung 3 über die Signalleitung 8 mit einer übergeordneten Steuerung (nicht dargestellt) eine vorbestimmt Meldung aus. Wenn die Temperatur einzelner galvanischer Zellen 2 einen Zielwert überschreitet, so verringert die Steuereinrichtung 3 den maximal entnehmbaren Summenstrom zur Versorgung des Kfz-Antriebs und übermittelt der übergeordneten Steuerung eine entsprechende Meldung.

Als weiterer Vorteil wird so das Überladen oder Tiefentladen einzelner galvanischer Zellen wirksam verhindert.

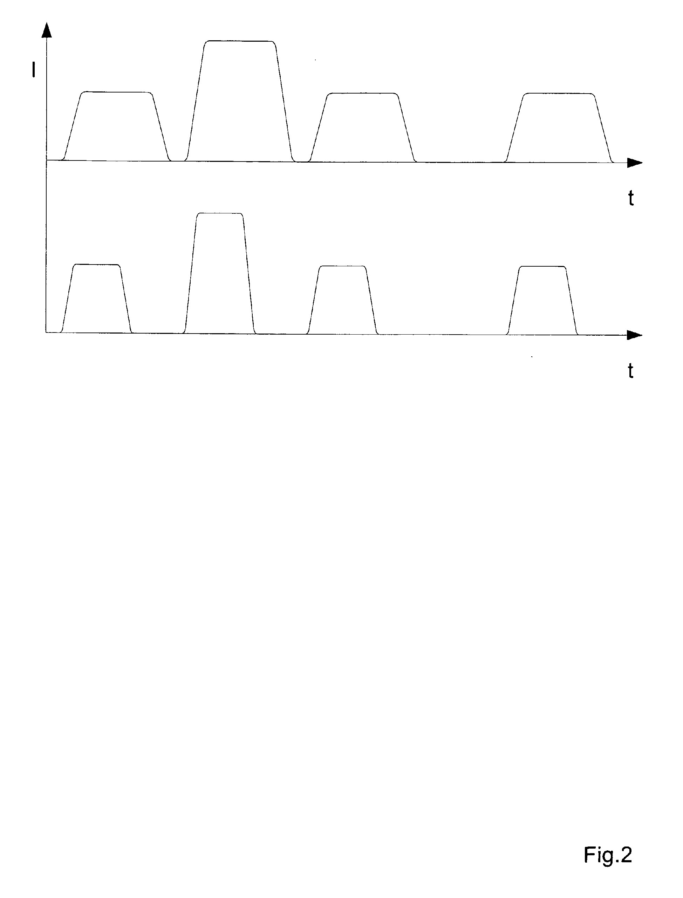

Fig.2 zeigt beispielhaft zwei Pulsfolgen von verschiedenen Ladevorschriften. Die obere Pulsfolge zeichnet sich durch zeitlich längere Pulse im Vergleich zur unteren Pulsfolge aus. Die Taktung der einzelnen Pulse ist dabei gleich. Die Pulse beginnen jeweils zum selben Zeitpunkt. Die obere Pulsfolge ist für eine galvanische Zelle bestimmt, welche eine geringere Teilladung aufweist, als die galvanische Zelle, die entsprechend der unteren Pulsfolge geladen wird. Nicht dargestellt ist, dass das Laden der Zelle mit der höheren Teilladung auch früher beendet wird. Hierbei spielt auch die Erwärmung einer galvanischen Zelle während eines Ladevorgangs eine wichtige Rolle. Die Erwärmung kann Anlass geben, einen vollständigen Ausgleich der verschiedenen Ladezustände zweier galvanischer Zellen erst nach mehreren Ladevorgängen anzustreben.

**Patentansprüche**

1. Akkumulator (1), welcher aufweist: wenigstens zwei galvanische Zellen (2), wobei wenigstens zwei galvanische Zellen (2) elektrisch verschaltet sind, eine Steuereinrichtung (3), wenigstens eine Messeinrichtung (4, 4a, 4b), welche zur Ermittlung eines Messwerts zu wenigstens einem ersten Funktionsparameter einer galvanischen Zelle (2) vorgesehen ist, **dadurch gekennzeichnet, dass** der Akkumulator (1) weiter eine Speichereinheit (6) aufweist, welche der Steuereinrichtung (3) zugeordnet ist und dafür vorgesehen ist, wenigstens einen Zielwert eines ersten Funktionsparameters abzuspeichern, dass der Akkumulator (1) weiter eine Recheneinrichtung (5) aufweist, welche dafür vorgesehen ist, wenigstens einen Messwert zu einer ersten galvanischen Zelle (2), einen Messwert zu einer weiteren galvanischen Zelle (2) und einen Zielwert zu wenigstens einem ersten Berechnungsergebnis zu verknüpfen, und dass die Steuereinrichtung (3) vorgesehen ist, in Abhängigkeit des ersten Berechnungsergebnisses eine vorbestimmte Maßnahme einzuleiten.

2. Akkumulator (1) gemäß Anspruch 1, **dadurch gekennzeichnet, dass** die Steuereinrichtung (3) weiter vorgesehen ist, das Laden bzw. das Entladen von wenigstens zwei galvanischen Zellen (2) gemäß verschiedener vorgegebener Ladevorschriften zu steuern.

3. Akkumulator (1) gemäß Anspruch 1, **dadurch gekennzeichnet, dass** die Steuereinrichtung (3) weiter vorgesehen ist, das Laden bzw. das Entladen einer galvanischen Zelle (2) gemäß wenigstens einer vorgegebenen Ladevorschrift zu steuern.

4. Akkumulator (1) gemäß Anspruch 2 oder 3, **dadurch gekennzeichnet, dass** eine vorgegebene Ladevorschrift wenigstens einen Ladepuls aufweist.

5. Akkumulator (1) gemäß wenigstens einem der Ansprüche 2 bis 4, **dadurch gekennzeichnet, dass** die Steuerungseinrichtung (3) weiter vorgesehen ist, eine vorgegebene Ladevorschrift zu überschreiben.

6. Akkumulator (1) gemäß wenigstens einem der Ansprüche 1 bis 5, **dadurch gekennzeichnet, dass** die Speichereinheit (6) weiter vorgesehen ist, einen Messwert zu einem Funktionsparameter und/oder eine davon abgeleitete Größe gemeinsam mit wenigstens einem ersten Wert, der stellvertretend für den Zeitpunkt der Messung ist, und/oder gemeinsam mit wenigstens einem zweiten Wert, der stellvertretend für die dem Messwert zugehörige galvanische Zelle ist, abzuspeichern.

7. Akkumulator (1) gemäß wenigstens einem der Ansprüche 1 bis 6, **dadurch gekennzeichnet, dass** die Steuereinrichtung (3) vorgesehen ist, wenigstens zeitweise: die wenigstens eine Messeinrichtung (4, 4a, 4b) zu starten, die Recheneinrichtung (5) zu starten und/oder der Recheneinrichtung (5) einen Zielwert eines ersten Funktionsparameters mitzuteilen.

8. Akkumulator (1) gemäß wenigstens einem der Ansprüche 1 bis 7, **dadurch gekennzeichnet, dass** die Steuerungseinrichtung (3) vorgesehen ist, mit einer unabhängigen Steuerung wenigstens zeitweise wenigstens eine vorbestimmte Meldung auszutauschen.

9. Verfahren zum Betrieb eines Akkumulators (1) gemäß einem der Ansprüche 1 bis 8, **dadurch gekennzeichnet: dass** die wenigstens eine Messeinrichtung (4, 4a, 4b) wenigstens zeitweise einen ersten Funktionsparameter der wenigstens zwei galvanischen Zellen (2) misst, dass die Recheneinrichtung (5) die Messwerte des ersten Funktionsparameters zu wenigstens zwei galvanischen Zellen (2) mit einem Zielwert des ersten Funktionsparameters zu einem ersten Berechnungsergebnis verknüpft, und dass die Recheneinrichtung (5) das erste Berechnungsergebnis der Steuereinrichtung (3) übermittelt.

10. Verfahren gemäß Anspruch 9 zum Betrieb eines Akkumulators (1) gemäß einem der Ansprüche 2 bis 8, **dadurch gekennzeichnet, dass** die Steuereinrichtung (3) unter Verwendung eines ersten Berechnungsergebnisses verschiedene Ladevorschriften für jede der wenigstens zwei galvanischen Zellen (2) verwendet.

11. Verfahren gemäß Anspruch 9 oder 10 zum Betrieb eines Akkumulators (1) gemäß einem der Ansprüche 1 bis 8, **dadurch gekennzeichnet, dass** die Steuereinrichtung (3) unter Verwendung eines ersten Berechnungsergebnisses eine vorgegebene Maßnahme einleitet.

12. Verfahren gemäß einem der Ansprüche 9 bis 11 zum Betrieb eines Akkumulators (1) gemäß einem der Ansprüche 6 bis 8, **dadurch gekennzeichnet, dass** in der Speichereinheit (6) wenigstens ein Ereignis betreffend die Lade- und/oder Entladevorgänge der wenigstens zwei galvanischen Zellen (2) abgespeichert wird.

Fig.1

Fig.2